# EUROPEAN PATENT APPLICATION

(11) **EP 1 758 112 A2**
(43) Date of publication of application: **28.02.2007**
(21) Application number: 06119120.1
(22) Date of filing: 17.08.2006
(51) Int. Cl.: G11B 19/04, G11B 21/12

(54) **Information recording apparatus, information recording method and computer program**

(30) Priority: 26.08.2005 JP 2005245376
(71) Applicant: SONY CORPORATION, Tokyo (JP)
(72) Inventor: Kobayashi, Kou, TOKYO (JP); Watanabe, Katsuhiko, TOKYO (JP); Imai, Kenichiro, TOKYO (JP); Yokota, Junichi, TOKYO (JP); Ito, Ryogo, TOKYO (JP); Shimono, Hiroshi, TOKYO (JP)
(74) Representative: Thévenet, Jean-Bruno

(57) **Abstract**

An information recording apparatus (100) for performing data recording processing includes: a data storage portion (104) holding write data on a disk (122); an apparatus control portion (105) for managing the data storage portion (104) and controlling data recording processing; and a disk recording control portion (123) obtaining data held in the data storage portion (104) and performing processing of recording on the disk (122) through data holding means (121), wherein the apparatus control portion (105) is configured to perform, in the data recording processing on the disk (122), processing of: defining boundary information indicating the boundary position between disk-recorded-guaranteed data, which is guaranteed as data having been recorded on the disk (122) completely, and unguaranteed data in data held in the data storage portion (104); and deleting the disk-recorded data identified by the boundary information selectively from the data storage portion (104).

## Description

### BACKGROUND OF THE INVENTION

### 1. Field of the Invention

The present invention relates to an information recording apparatus, an information recording method and a computer program. In particular, the present invention relates to an information recording apparatus, information recording method and computer program, which can prevent a damage due to an impact to a hard disk device and can also prevent data loss therein, in equipment including a hard disk functioning as a data recording device of a camera, a PC and so on.

### 2. Description of the Related Art

In recent years, with decreases in size of hard disk drives (HDDs), HDDs have been adopted as recording media in various equipment including an imaging apparatus such as a digital camera and a digital video camera. However, an HDD is disadvantageously vulnerable to a mechanical impact. When an HDD is subject to a large impact due to a drop of the equipment, for example, with a head thereof on the disk during data writing/reading processing, the destroyed head puts the HDD out of action.

In order to prevent that kind of destruction of an HDD due to a drop, a measure is taken that an accelerator sensor is included in equipment having the HDD. In this case, the sensor detects a drop, and immediately after the equipment starts falling and before an impact occurs due to the hit to a floor, for example, the head of the HDD is evacuated from the disk to avoid the destruction.

Performing such head evacuation processing can prevent the destruction of the head and avoid putting the HDD out of action. If the head has been evacuated during data reading processing, the information recorded in the HDD can be reread again after the equipment recovers to a stable state, preventing problems such as information missing.

However, when, for example, the detection of a drop causes the head evacuation while moving image data is being recorded on a hard disk, the data writing processing is forcibly ended. As a result, data to be written is lost, and a problem occurs that the data to be recorded is lost though the destruction of the HDD can be prevented. More specifically, if the equipment including an HDD is a video camera, for example, even shot data is not disadvantageously recorded onto the hard disk.

### SUMMARY OF THE INVENTION

It is desirable to provide an information recording apparatus, information recording method and computer program which, in HDD-included equipment, can prevent a damage to a hard disk device due to an impact caused by a drop thereof, for example, and can prevent data loss even when head evacuation processing is performed while data recording processing is being performed.

According to an embodiment of the invention, there is provided an information recording apparatus for performing data recording processing, including:
a data storage portion for holding write data on a disk;
an apparatus control portion for managing the data storage portion and controlling data recording processing; and
a disk recording control portion for obtaining data held in the data storage portion and performing processing of recording on the disk through a data holding unit,
wherein the apparatus control portion is configured to perform, in the data recording processing on the disk, processing of:
defining boundary information indicating the boundary position between disk-recorded-guaranteed data, which is guaranteed as data having been recorded on the disk completely, and unguaranteed data in data held in the data storage portion; and
deleting the disk-recorded data identified by the boundary information selectively from the data storage portion.

In the information recording apparatus according to the embodiment of the invention, the apparatus control portion may further be configured to perform processing of, in the data recording processing on the disk:
outputting an execution instruction for the completion of and completion response for the disk recording processing on the data written in the data holding unit to the disk recording control portion; and
updating the boundary information based on the receipt of the completion response to the execution instruction.

In the information recording apparatus according to the embodiment of the invention, the apparatus control portion may further be configured to perform processing of deleting disk-recorded data newly identified by the updated boundary information from the data storage portion after the update of the boundary information.

The information recording apparatus according to the embodiment of the invention may further include:
an acceleration detecting portion for detecting an acceleration occurring in the information recording apparatus,
wherein the apparatus control portion is configured to perform processing of evacuating the head, which writes or reads data to/from the disk, when an acceleration corresponding to a drop of the information recording apparatus is detected based on detection information input from the acceleration detecting portion.

The information recording apparatus according to the embodiment of the invention may further include:
an acceleration detecting portion for detecting an acceleration occurring in the information recording apparatus,
wherein the apparatus control portion is configured to perform the shut-off of the power supply to the driving portion of the disk when an acceleration corresponding to a drop of the information recording apparatus is detected based on detection information input from the acceleration detecting portion.

The information recording apparatus according to the embodiment of the invention may further include:
an acceleration detecting portion for detecting an acceleration occurring in the information recording apparatus,
wherein the apparatus control portion is configured to:
perform processing of checking whether the information recording apparatus has recovered to a stable state or not based on detection information input from the acceleration detecting portion;
restart power supply to the driving portion of the disk on condition that the recovery to the stable state is confirmed; and
perform data recording processing control in which the disk-recorded-unguaranteed data identified by the position of the boundary information defined in the data storage portion is defined as the data to undergo recording processing on the disk.

According to another embodiment of the invention, there is provided an information recording method for performing data recording processing on a disk in an information recording apparatus, including:
a memory storage step of storing data to be recorded in a data storage portion;
a data storage step of obtaining data held in the data storage portion and storing the data in a data holding unit;
a disk recording processing step of recording data stored in the data holding unit onto the disk;
the step of defining boundary information indicating the boundary position between disk-recorded-guaranteed data, which is guaranteed as data having recorded on the disk completely, and unguaranteed data in the data held in the data storage portion; and
a data deleting step of performing processing of deleting disk-recorded data identified by the boundary information selectively from the data storage portion.

The information recording method according to the embodiment of the invention may further include the steps of:
outputting an execution instruction for the completion of and completion response for the disk recording processing on the data written in the data holding unit from an apparatus control portion for managing the data storage portion to a disk recording control portion for controlling processing of recording write data in the data holding unit onto the disk; and
performing processing of updating the boundary information on condition that the completion response is received in the apparatus control portion.

The information recording method according to the embodiment of the invention may further include the step of:
performing processing of deleting disk-recorded data newly identified by the updated boundary information from the data storage portion after the update of the boundary information.

The information recording method according to the embodiment of the invention may further include the steps of:
inputting detection information on an acceleration of the information recording apparatus from an acceleration detecting portion; and
performing processing of evacuating the head, which writes or reads data to/from the disk, when an acceleration corresponding to a drop of the information recording apparatus is detected.

The information recording method according to the embodiment of the invention may further include the steps of:
inputting detection information on an acceleration of the information recording apparatus from an acceleration detecting portion; and
performing the shut off of the power supply to the driving portion of the disk when an acceleration corresponding to a drop of the information recording apparatus is detected.

The information recording method according to the embodiment of the invention may further include the steps of:
performing processing of checking whether the information recording apparatus has recovered to a stable state or not based on detection information input from the acceleration detecting portion; and
restarting power supply to the driving portion of the disk on condition that the recovery to the stable state is confirmed and performing data recording processing control in which the disk-recorded-unguaranteed data identified by the position of the boundary information defined in the data storage portion is defined as the data to undergo recording processing on the disk.

According to another embodiment of the invention, there is provided a computer program causing to control data recording processing on a disk in an information recording apparatus, including:
a memory storage step of storing data to be recorded in a data storage portion;
a data storage step of obtaining data held in the data storage portion and storing the data in a data holding unit;
a disk recording processing step of recording data stored in the data holding unit onto the disk;
the step of defining boundary information indicating the boundary position between disk-recorded-guaranteed data, which is guaranteed as data having recorded on the disk completely, and unguaranteed data in the data held in the data storage portion; and
a data deleting step of performing processing of deleting disk-recorded data identified by the boundary information selectively from the data storage portion.

It should be noted that the computer program according to the embodiment of the invention is available to a general computer system in which various kinds of program code are executable, for example, through a computer-readable storage medium such as a CD, an FD and an MO and a communication medium such as a network. Providing the program in a computer-readable manner can implement processing in accordance with the program on the computer system.

Further objects, features and advantages of the invention will be apparent from further descriptions based on embodiments of the invention, which will be described later, and attached drawings. It should be noted that the term, "system", herein refers to a logical set construction of multiple apparatus, not limiting to component apparatus within one cabinet.

In a construction according to an embodiment of the invention, a microcomputer functioning as an apparatus side control portion outputs a flush cache request and receives the response for checking the presence of data, which has been stored in a cache memory on the HDD side but has not been recorded on a disk itself during data recording processing on the hard disk. On condition that the response is received, the data to be flush-cached is deleted from the memory on the apparatus body side. Thus, holding data unrecorded on a disk in an apparatus-side memory is guaranteed even when the power supply to the HDD is shut off in emergency such as a drop and data is lost from the memory on the HDD side. Therefore, restarting data recording onto a disk after the HDD restarts can implement complete data recording without any data loss.

Furthermore, since the microcomputer is configured to identify the position of data recorded on a disk by boundary information (pointer), the data-recording restarting position upon restart of data-recording after shut off of the power supply to the HDD can be identified by the boundary information (pointer).

### BRIEF DESCRIPTION OF THE DRAWINGS

Fig. 1 is a diagram describing a construction example of an imaging apparatus, which is an example of an information recording apparatus of the invention;
Fig. 2 is a diagram describing an example of transition in acceleration detected by an acceleration sensor when an information recording apparatus falls;
Fig. 3 is a diagram describing a power supply construction of an information recording apparatus according to an embodiment of the invention;
Fig. 4 is a diagram describing steps of data recording processing by the information recording apparatus according to the embodiment of the invention;
Fig. 5 is a diagram describing changes in data recorded in components including a memory, an HDD cache and a disk during data recording processing by the information recording apparatus according to the embodiment of the invention;
Fig. 6 is a diagram describing changes in data recorded in components including the memory, the HDD cache and the disk during data recording processing by the information recording apparatus according to the embodiment of the invention;
Fig. 7 is a diagram describing changes in data recorded in components including the memory, the HDD cache and the disk during data recording processing by the information recording apparatus according to the embodiment of the invention;
Fig. 8 is a diagram describing changes in data recorded in components including the memory, the HDD cache and the disk during data recording processing by the information recording apparatus according to the embodiment of the invention;
Figs. 9 is diagrams describing changes in data recorded in components including the memory, the HDD cache and the disk when a drop occurs during data recording processing in the information recording apparatus according to the embodiment of the invention;
Fig. 10 is a diagram describing changes in data recorded in components including the memory, the HDD cache and the disk when a drop occurs during data recording processing in the information recording apparatus according to the embodiment of the invention;
Fig. 11 is a diagram showing a flowchart describing a data recording processing sequence to be performed by the information recording apparatus according to the embodiment of the invention; and
Fig. 12 is a diagram showing a flowchart describing a data recording processing sequence to be performed by the information recording apparatus according to the embodiment of the invention.

### DESCRIPTION OF THE PREFERRED EMBODIMENTS

Details of an information recording apparatus, information recording method and computer program according to an embodiment of the invention will be described below with reference to drawings.

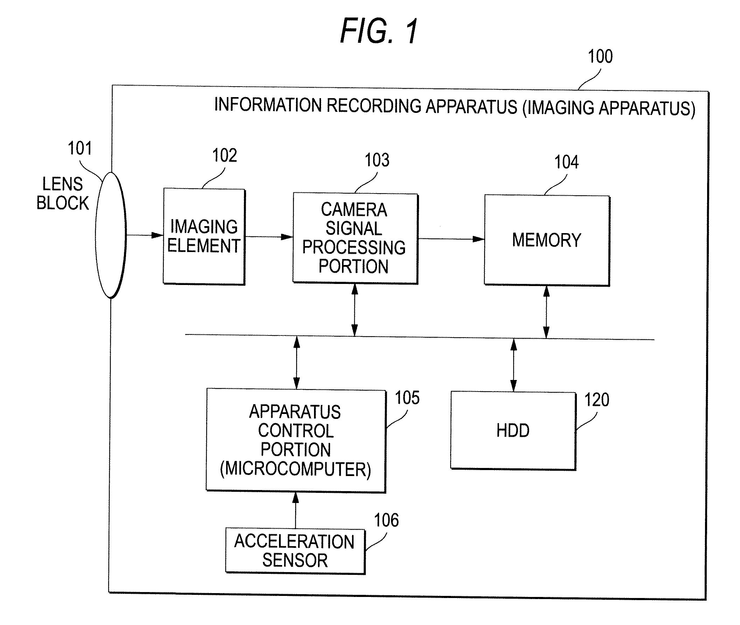

First of all, a construction example of an information recording apparatus according to an embodiment of the invention will be described with reference to Fig. 1. The invention is applicable to information processing equipment having a hard disk drive (HDD) functioning as a data storage device. In the embodiment to be described below, an imaging apparatus such as a digital camera and a digital video camera will be described as an example of an information recording apparatus according to the embodiment of the invention.

The block diagram shown in Fig. 1 shows a construction of an information recording apparatus 100 functioning as an imaging apparatus such as an HDD (hard disk drive)-mounted, compact portable digital camera and digital video camera and includes a component for recording shot information on a hard disk.

The information recording apparatus (imaging apparatus) 100 includes a lens block 101, an imaging element 102 such as a CCD, a camera signal processing portion 103, a data storage portion (memory) 104, a hard disk drive (HDD) 120 and an apparatus control portion (microcomputer) 105. The lens block 101 has one lens or a combination of multiple lenses. The camera signal processing portion 103 performs signal processing on image data captured by the imaging element 102, such as analog signal processing, A/D conversion processing, digital signal processing and encode processing. The data storage portion (memory) 104 temporarily stores image data processed in the camera signal processing portion 103. The HDD 120 has a hard disk for permanently recording image data recorded in the data storage portion (memory) 104. The apparatus control portion (microcomputer) 105 has a CPU for performing entire control over data shooting and recording processing. The information recording apparatus 100 further includes an accelerator sensor 106 for measuring the acceleration in XYZ orthogonal three-axis directions.

The apparatus control portion (microcomputer) 105 manages the data storage portion (memory) 104 and controls data recording processing. More specifically, in data recording processing on a disk, the apparatus control portion (microcomputer) 105 defines boundary information (pointer) for indicating the boundary position between disk-recorded-guaranteed data and unguaranteed data in data held in the data storage portion (memory) 104. The disk-recorded-guaranteed data is data that is guaranteed to have been completely recorded on the disk. Then, the apparatus control portion (microcomputer) 105 performs processing for selectively deleting, from the memory, disk-recorded data identified by the boundary information (pointer). Details of the processing will be described later.

The accelerator sensor 106 is an accelerator detecting portion for detecting each of accelerations corresponding to X, Y and Z three orthogonal axes and inputting the detected data to the apparatus control portion (microcomputer) 105. The apparatus control portion (microcomputer) 105 performs state determination processing including determination on the state of the information recording apparatus (imaging apparatus) 100, such as whether it is still or falling, based on the input acceleration information from the acceleration sensor 106. Based on the determined state information, the apparatus control portion (microcomputer) 105 further controls data recording processing.

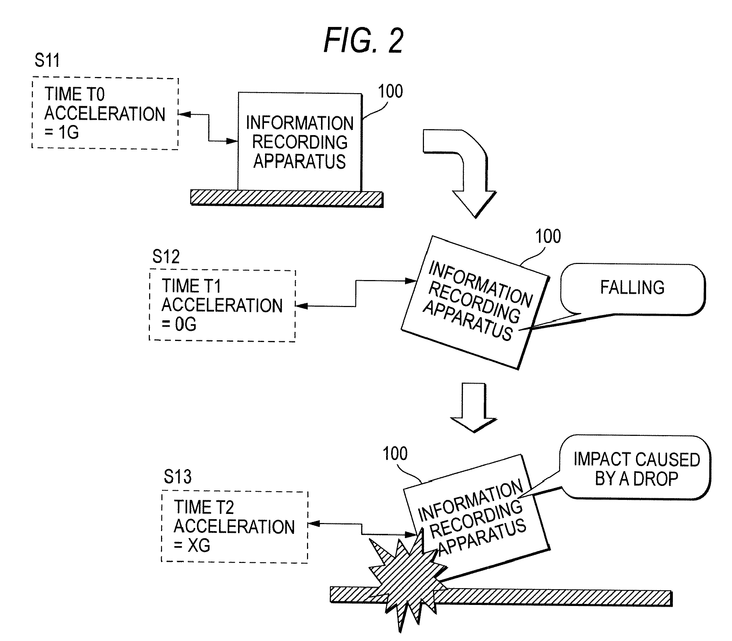

The apparatus control portion (microcomputer) 105 periodically monitors the accelerations measured by the acceleration sensor 106 and periodically and continuously performs determination processing on the state of the information recording apparatus (imaging apparatus) 100. Referring to Fig. 2, the measurement information by the acceleration sensor 106 will be described which is to be monitored by the apparatus control portion (microcomputer) 105 when the information recording apparatus (imaging apparatus) 100 falls.

First of all, step S11 indicates that the information recording apparatus (imaging apparatus) 100 is at a still state at time T0. At time T0, the acceleration functioning as the measurement information by the acceleration sensor 106 to be monitored by the apparatus control portion (microcomputer) 105 is acceleration = 1 G. Notably, the G-value indicated herein is a value to be measured as a synthetic vector of the accelerations for the X, Y and Z three orthogonal axes of the three-axes acceleration sensor 106. At a still state, the acceleration of gravity based on the pull is measured, resulting in acceleration = 1 G.

Step S12 indicates that the information recording apparatus (imaging apparatus) 100 is at a falling state at time T1. At time T1, the acceleration functioning as the measurement information by the acceleration sensor 106 to be monitored by the apparatus control portion (microcomputer) 105 is acceleration = 0 G. At a falling state, the acceleration of gravity based on the pull does not occur, resulting in acceleration = 0 G.

Step S13 indicates a state that the information recording apparatus (imaging apparatus) 100 hits a floor, for example, at time T2. At time T2, the acceleration functioning as the measurement information by the acceleration sensor 106 to be monitored by the apparatus control portion (microcomputer) 105 is acceleration = X G. Due to the hit, a large acceleration is applied to the information recording apparatus (imaging apparatus) 100, and an acceleration equal to or higher than one (1) is measured.

The apparatus control portion (microcomputer) 105 monitors measurement information by the acceleration sensor 106, determines that the information recording apparatus (imaging apparatus) 100 is shifted to a falling state when a change in acceleration (1 G - 0 G) is detected, for example, performs head evacuation processing on the hard disk drive (HDD) 120, stops power supply to the hard disk drive (HDD) 120, and controls data recording processing. The completion of the head evacuation processing before time T2 can prevent a damage to the head of the hard disk drive (HDD) 120. Notably, the head evacuation processing on the hard disk drive (HDD) 120 is performed during a sequence involved in the processing of stopping the power supply to the hard disk drive (HDD) 120, for example.

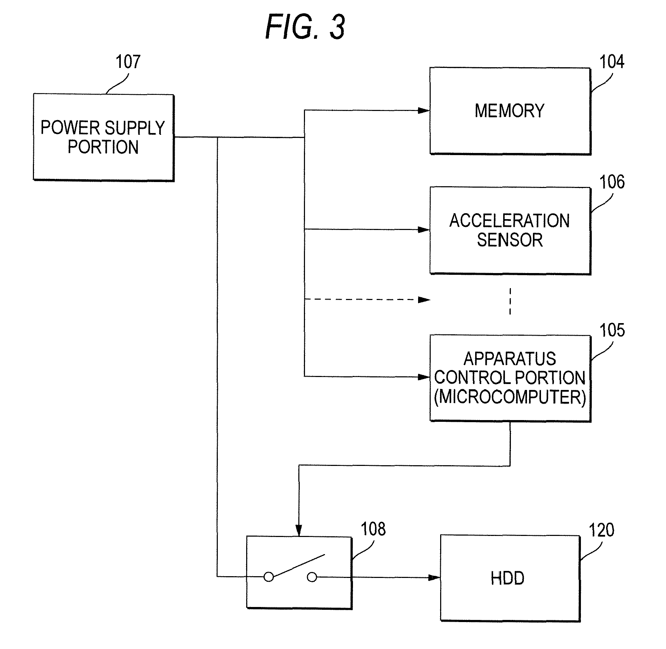

The hard disk drive (HDD) 120 is configured to enable to power on and off independently of the body. The power supply control for the HDD 120 is performed under the control of the apparatus control portion (microcomputer) 105. In other words, as shown in Fig. 3, the power from a power supply portion 107 is supplied to components including the data storage portion (memory) 104, the acceleration sensor 106 and the apparatus control portion (microcomputer) 105 and is further supplied to the hard disk drive (HDD) 120. In this case, the apparatus control portion (microcomputer) 105 controls a switch 108 to control the shut-off of the power supply to the hard disk drive (HDD) 120. For example, when a change in acceleration (1 G → 0 G) is detected through the monitoring of the measurement information by the acceleration sensor 106, the apparatus control portion (microcomputer) 105 determines that the information recording apparatus (imaging apparatus) 100 is shifted to a falling state and stops the power supply to the hard disk drive (HDD) 120. As a part of the processing of stopping the power supply to the hard disk drive (HDD) 120, processing of returning the head to a standby position is performed.

In performing the head evacuation processing to be performed when such a drop is detected, for example, the information recording apparatus 100 according to this embodiment of the invention performs data control over the data in the process of data recording while the data recording processing is being performed on the hard disk drive (HDD) 120 in order to prevent the data loss.

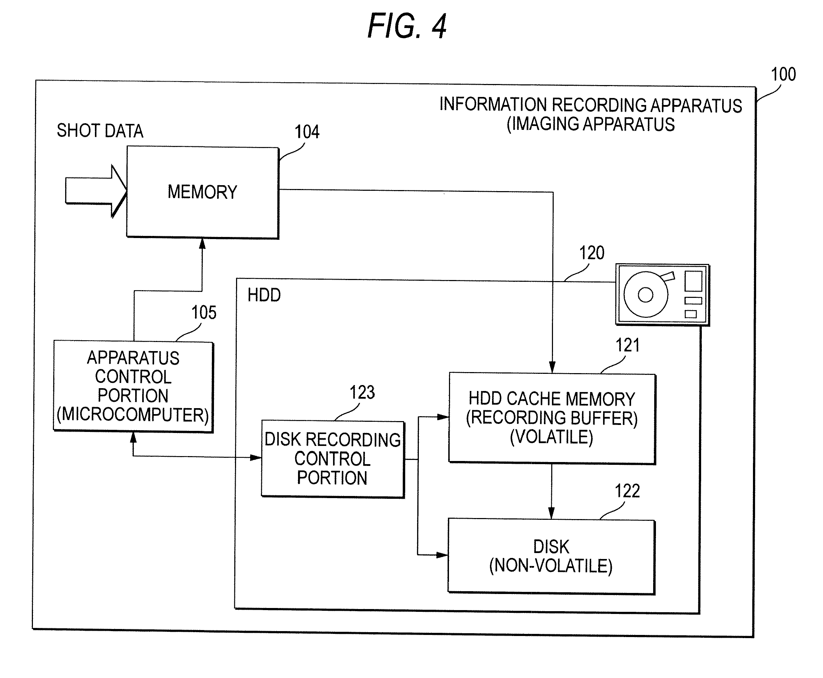

First of all, a general data recording sequence on a hard disk will be described with reference to Fig. 4. Data image-captured by a camera undergoes data processing such as digitalizing and encoding and then is once recorded in the data storage portion (memory) 104 on the apparatus body side. When a predetermined amount of recorded data is stored in the data storage portion (memory) 104, a write request is input to the HDD. Then, performing processing by the HDD 120 is started on the data recorded in the data storage portion (memory) 104.

As shown in Fig. 4, the HDD 120 internally includes a data holding unit (HDD cache memory) 121 functioning as a volatile buffer memory for recording. The data recorded in the data storage portion (memory) 104 is written in the data holding unit (HDD cache memory) 121, and a predetermined recording unit of the data is then recorded from the data holding unit (HDD cache memory) 121 to the disk 122. The processing control over the inside of the HDD 120 is performed by a disk recording control portion 123. The disk recording control portion 123 performs processing control including obtaining data held in the data storage portion (memory) 104, storing it in the cache memory 121 and recording the data stored in the cache memory 121 into the disk 122.

The disk recording control portion 123 further performs processing including receiving a flush cache request output from the apparatus control portion (microcomputer) 105, performs recording processing in accordance with the request and outputting the completion response to the apparatus control portion (microcomputer) 105. Details of the processing will be described later.

As described above, the head evacuation processing on the HDD 120 upon detection of a drop is performed in response to the shut-off of the power supply to the HDD 120, for example. Therefore, the data in the data holding unit (HDD cache memory) 121 is lost if the data holding unit (HDD cache memory) 121 functioning as a volatile buffer memory for recording within the HDD 120 has data not recorded on the disk 122 when the head evacuation is performed in response to the shut off of the power supply to the HDD 120.

The data held only in the data holding unit (HDD cache memory) 121 is lost even by transferring the data recorded in the data storage portion (memory) 104 on the body side to the data holding unit (HDD cache memory) 121 continuously after the equipment returns to a stable state and the HDD 120 is restarted and further continuously performing data recording on the hard disk 122. Thus, an interruption occurs in recorded data in the hard disk, resulting in data having an error.

Accordingly, in the information recording apparatus according to this embodiment of the invention, the apparatus control portion (microcomputer) 105 is configured to check the completion of data recording processing on the disk 121 in the HDD 120 and only delete, from the data storage portion (memory) 104, data having completely recorded in the disk 121. The apparatus control portion (microcomputer) 105 outputs a flush cache instruction sporadically to the disk recording control portion 123 of the HDD 120 and receives a response to the flush cache instruction from the HDD 120. Thus, the apparatus control portion (microcomputer) 105 can identify the data area having completely undergone disk recording and deletes the recorded data from the data storage portion (memory) 104.

The flush cache request is sporadically output from the apparatus control portion (microcomputer) 105 to the disk recording control portion 123 of the HDD 120 while the data recording processing is being performed. More specifically, the flush cache request is output from the apparatus control portion (microcomputer) 105 to the HDD 120 every preset and predetermined period of time or for each predetermined unit of recorded data.

The flush cache instruction is a processing instruction for completing processing of recording to the disk 122 on the data written from the data storage portion (memory) 104 on the apparatus body side to the data holding unit (HDD cache memory) 121 and outputting a completion response indicating the completion of the processing.

In response to a flush cache instruction from the apparatus control portion (microcomputer) 105, the disk recording control portion 123 of the HDD 120 records all of data written in the data holding unit (HDD cache memory) 121 upon receipt of the instruction onto the disk 122 and, after the completion of the disk recording, outputs a response indicating the completion of the recording processing to the apparatus control portion (microcomputer) 105. The processing is performed by the disk recording control portion 123, which performs data recording control in the HDD 120.

After outputting a flush cache instruction, the apparatus control portion (microcomputer) 105 waits for input of a response indicating that flush cache processing has completed from the disk recording control portion 123 of the HDD 120. Until the receipt of a response from the HDD 120, the apparatus control portion (microcomputer) 105 does not delete, from the data storage portion (memory) 104, even data written from the data storage portion (memory) 104 to the data holding unit (HDD cache memory) 121 but holds it.

The apparatus control portion (microcomputer) 105 deletes flush-cache processed data, that is, data in the data storage portion (memory) 104, which corresponds to disk recorded data on condition that the apparatus control portion (microcomputer) 105 has received a response indicating that the flush cache processing has completed from the disk recording control portion 123 of the HDD 120.

The apparatus control portion (microcomputer) 105 defines in the data storage portion (memory) 104 the boundary information (pointer) indicating the position of data having undergone the flush cache processing completely, that is, data having securely recorded in the disk. Then, the apparatus control portion (microcomputer) 105 updates the position of the boundary information (pointer) in response to receipt of the response indicating the completion of the flush cache processing from the HDD 120.

In this way, the information recording apparatus according to this embodiment of the invention securely holds data having not recorded on a disk yet in the data storage portion (memory) 104 of the body of the apparatus even though the data has been written in the data holding unit (HDD cache memory) 121. Thus, even when the data having been written in the data holding unit (HDD cache memory) 121 but not completely recorded on the disk is lost from the data holding unit (HDD cache memory) 121 upon shut-off of power supply to the HDD 120 due to a drop, for example, the data lost from the data holding unit (HDD cache memory) 121 can be securely held in the data storage portion (memory) 104 on the apparatus body side.

Therefore, after restart of the HDD, the data held in the data storage portion (memory) 104 on the apparatus body side can be written in the data holding unit (HDD cache memory) 121 again, and the recording processing can be then performed on the disk 122. As a result, complete data recording in the disk 122 can be achieved without any data missing part.

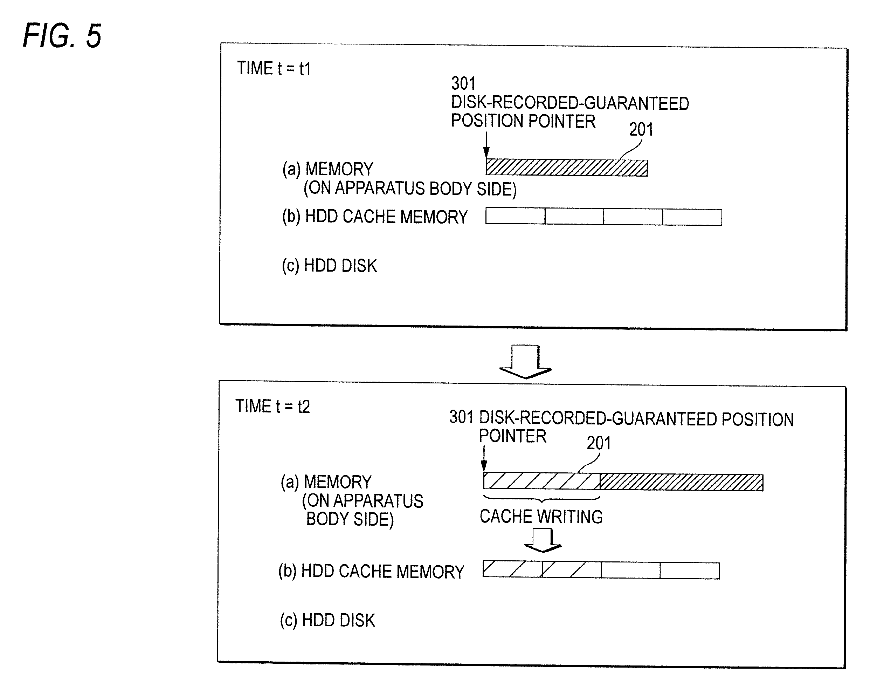

Referring to Figs. 5 to 8, changes in time during normal data recording processing of recorded data in components of:
(a) memory (on the apparatus body side),
(b) data holding unit (HDD cache memory), and
(c) HDD disk
will be described.

Figs. 5 to 8 show changes in recorded data in the (a) memory (on the apparatus body side), (b) data holding unit (HDD cache memory) and (c) HDD disk at execution times t1 to t8 of the data recording processing.

States will be described chronologically.

First of all, the state shown in Fig. 5 will be described.

### [time t=t1]

Data 201 captured by image-capturing processing is held in the (a) data storage portion (memory) 104 on the apparatus body side. Boundary information (pointer) 301 is defined in the data storage portion (memory) 104. The boundary information (pointer) 301 is data to be managed by the apparatus control portion (microcomputer) 105 and is disk-recorded-guaranteed position boundary information (pointer) indicating the position of data having undergone the flush cache processing completely, that is, the data having recorded on the disk completely and securely as described above.

The (b) data holding unit (HDD cache memory) and the (c) HDD disk do not have data.

### [time t=t2]

Under the control of the apparatus control portion (microcomputer) 105, data writing is performed from the (a) the data storage portion (memory) 104 on the apparatus body side to the (b) data holding unit (HDD cache memory) 121 (see Fig. 4). In other words, cache writing processing is performed. Write data 202 in a predetermined data unit is selected from the data storage portion (memory) 104, and the write data 202 is written in the data holding unit (HDD cache memory) 121 (see Fig. 4). At this point in time, the data in the (a) data storage portion (memory) 104 on the apparatus body side is not deleted, and the data storage portion (memory) 104 and the data holding unit (HDD cache memory) 121 hold identical data.

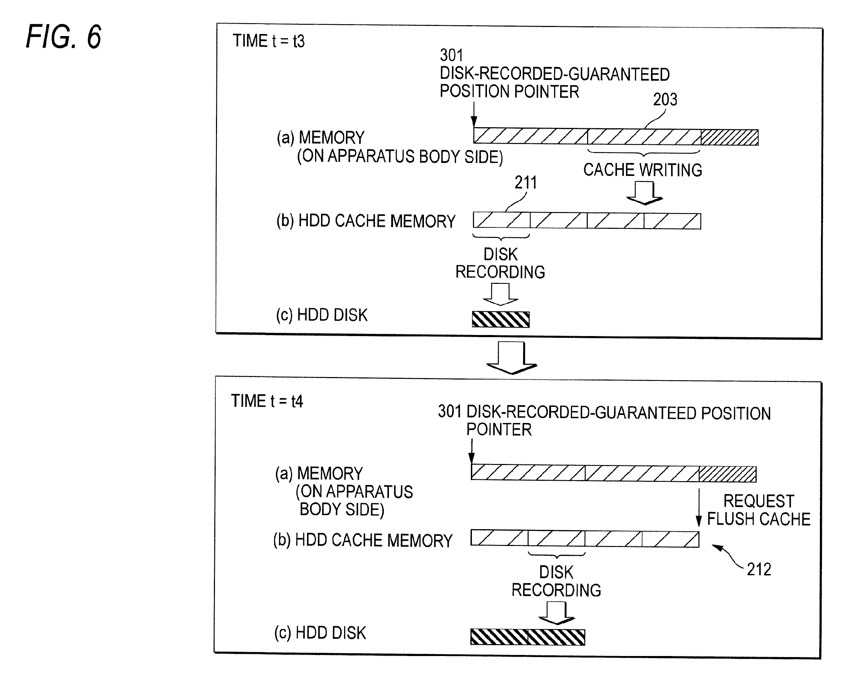

Next, the state shown in Fig. 6 will be described.

### [time t=t3]

Under the control of the apparatus control portion (microcomputer) 105, data writing is performed from the (a) the data storage portion (memory) 104 on the apparatus body side to the (b) data holding unit (HDD cache memory) 121 (see Fig. 4). In other words, cache writing processing is performed on the next data unit 203.

Furthermore, on the HDD 120 side, under the control of the disk recording control portion 123 on the HDD 120 side, predetermined recording unit data 211 is selected from the data written in the (b) data holding unit (HDD cache memory) 121, and recording processing to the disk 122 (see Fig. 4) is performed thereon.

### [time t=t4]

On the HDD side, the predetermined recording unit data is sequentially selected from data written in the data holding unit (HDD cache memory) 121, and recording processing onto the disk 122 (see Fig. 4) is continuously performed thereon. During the processing, the apparatus control portion (microcomputer) 105 outputs a flush cache request to the HDD.

As described above, the flush cache request is an execution instruction for requesting processing of causing the apparatus control portion (microcomputer) 105 to output a response indicating the completion of recording processing after all of the data 212 written in the data holding unit (HDD cache memory) 121 upon receipt of the flush cache instruction is recorded on the disk 122 and the disk recording is completed. The disk recording control portion 123 on the HDD 120 side, which performs data recording control in the HDD 120, records on the disk 122 data written in the data holding unit (HDD cache memory) 121, that is, all of the data 212 shown in Fig. 6 upon receipt of the flush cache request, and, after the completion of the disk recording, outputs a response indicating the completion of the recording processing to the apparatus control portion (microcomputer) 105.

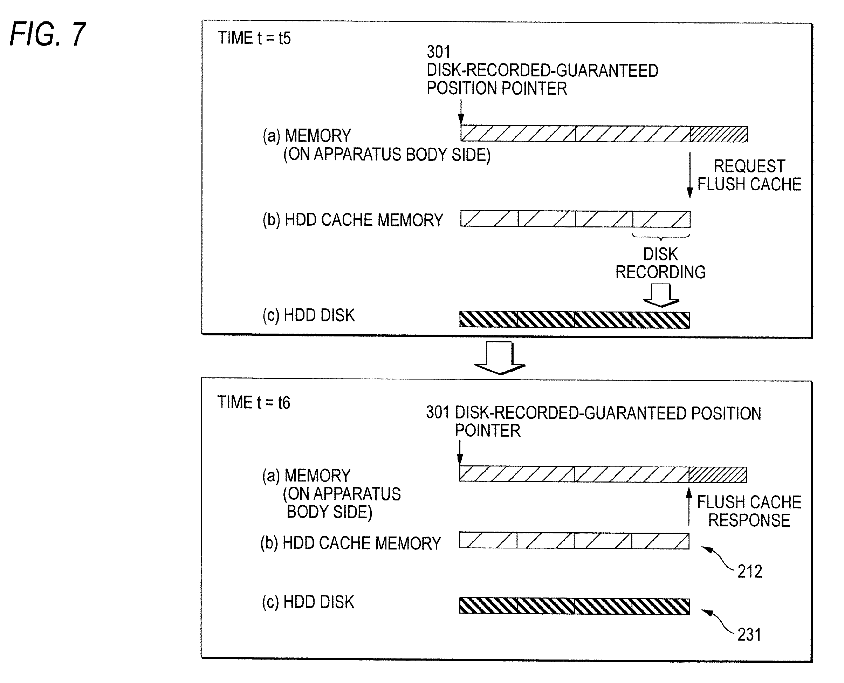

Next, the state shown in Fig. 7 will be described.

### [time t=t5]

Under the control of the disk recording control portion 123 on the HDD 120 side, in response to receipt of the flush cache request and upon receipt of the flush cache request, all of the data written in the data holding unit (HDD cache memory) 121 is recorded on the disk 122.

### [time t=t6]

When the processing of recording on the disk 122 all of the data written in the data holding unit (HDD cache memory) 121 completes upon receipt of the flush cache request, the disk recording control portion 123 on the HDD 120 side outputs a response (flush cache response) indicating the completion of the recording processing to the apparatus control portion (microcomputer) 105. At this point in time, the data 212 written in the data holding unit (HDD cache memory) 121 is all guaranteed to exist as disk-recorded data 231.

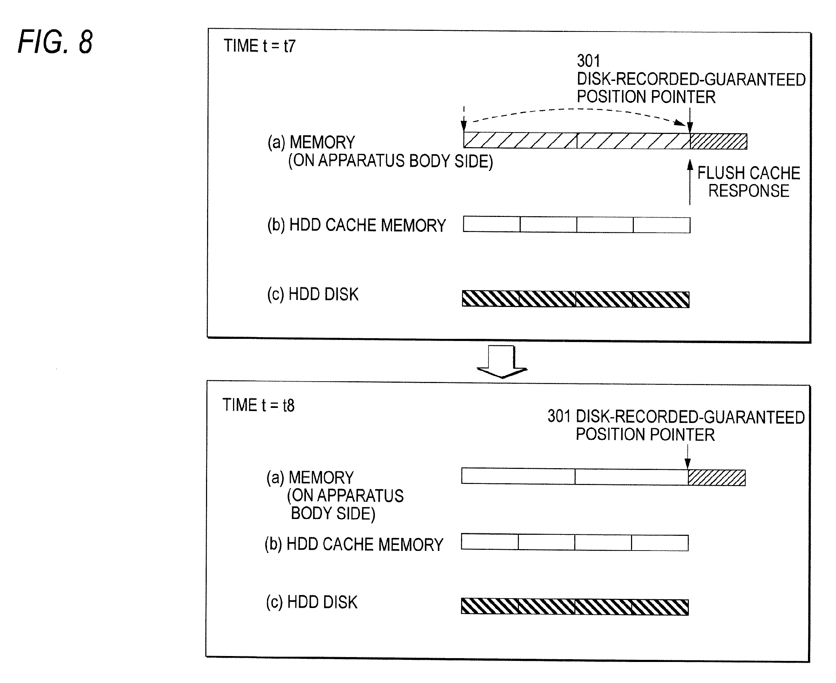

Next, the state shown in Fig. 8 will be described.

### [time t=t7]

Upon receipt of the flush cache response from the disk recording control portion 123 on the HDD 120 side, the apparatus control portion (microcomputer) 105 updates the disk-recorded-guaranteed position boundary information (pointer) 301. The apparatus control portion (microcomputer) 105 moves the boundary information (pointer) 301 to the position of the data having undergone the flush cache processing completely, that is, the data having recorded on the disk completely and securely.

The disk recording control portion 123 on the HDD 120 side deletes the data written in the data holding unit (HDD cache memory) 121 after the flush cache response.

### [time t=t8]

After updating the disk-recorded-guaranteed position boundary information (pointer) 301 at time t=t7, the apparatus control portion (microcomputer) 105 deletes the memory-stored data before the disk-recorded-guaranteed position boundary information (pointer) 301. The data is data having undergone the flush cache processing completely, that is, data guaranteed as being recorded on the disk completely and securely.

In this way, in the information recording apparatus according to this embodiment of the invention, the apparatus control portion (microcomputer) 105 on the apparatus body side is configured to sporadically output a flush cache instruction to the HDD 120, request a response on the completion of recording on the disk the data output before the output of the instruction, receive the flush cache response indicating the completion of the disk recording processing from the HDD 120, and then delete the corresponding data in the data storage portion (memory) 104 on the apparatus body side. Thus, even when the power of the HDD is emergently shut off like upon detection of a drop, the data which is not guaranteed to have been written on the disk can be maintained as being stored in the memory on the body side, resulting in no data missing.

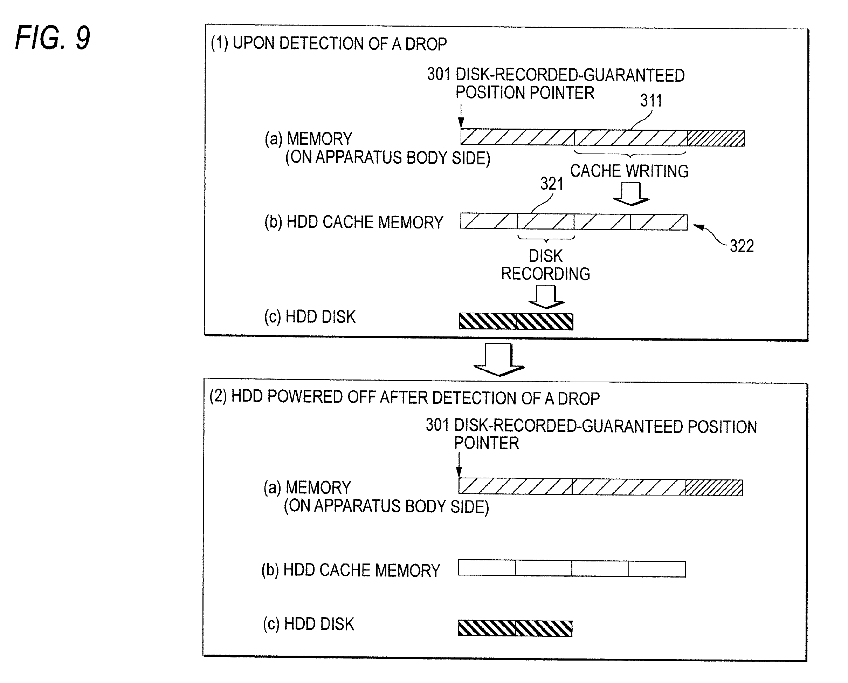

Referring to Figs. 9 to 10, changes in time of recorded data in components of:
(a) memory (on the apparatus body side),
(b) data holding unit (HDD cache memory), and
(c) HDD disk
when a drop is detected during the execution of the data recording processing in the information recording apparatus will be described.

Fig. 9 shows a state upon detection of a drop.

Under the control of the apparatus control portion (microcomputer) 105, predetermined unit data 311 is written from the (a) data storage portion (memory) 104 on the apparatus body side to the (b) data holding unit (HDD cache memory) 121 (see Fig. 4), that is, cache writing processing is performed thereon. In parallel with the cache writing processing, predetermined recording unit data 321 is selected from the data written in the (b) data holding unit (HDD cache memory) 121 and undergoes recording processing onto the disk 122 (see Fig. 4).

The boundary information (pointer) 301 is defined in the data storage portion (memory) 104. The boundary information (pointer) 301 is data to be managed by the apparatus control portion (microcomputer) 105 and is disk-recorded-guaranteed position boundary information (pointer) indicating the position of data having undergone the flush cache processing completely, that is, the data having recorded on the disk completely and securely as described above.

Here, it is assumed that, under this state, the apparatus control portion (microcomputer) 105 determines that the apparatus is falling based on an input from the accelerator sensor 106. By the drop determination processing, the apparatus control portion (microcomputer) 105 first controls the switch 108 described with reference to Fig. 3 to shut off the power supply to the HDD 120.

By the shut off of the power supply, the head is returned to the standby position, and, as shown in Fig. 9, the data 322 written in the data holding unit (HDD cache memory) 121 is all deleted.

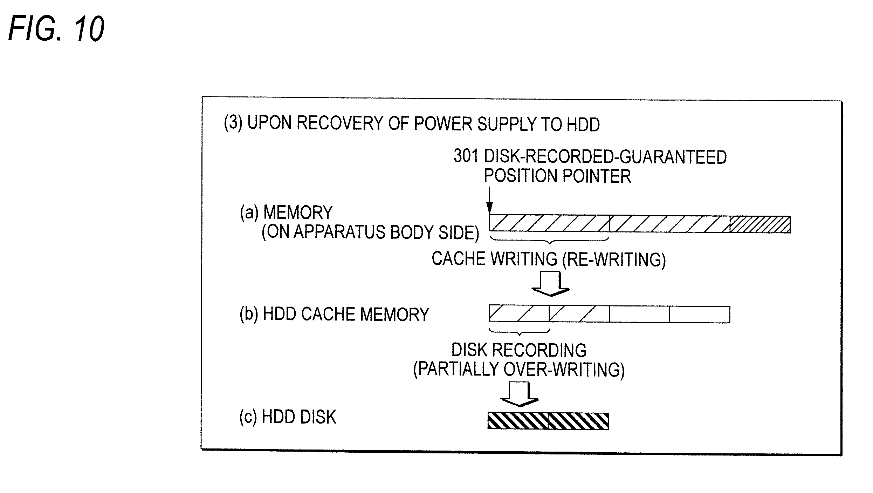

After the execution of the head evacuation processing on the HDD, the apparatus control portion (microcomputer) 105 observes the acceleration applied to the apparatus by using the acceleration sensor 106 again. When the state that the acceleration is stable substantially at 1 G is observed, the power supply to the HDD 120 is turned on again. After the HDD 120 is started and data writing is enabled, the apparatus control portion (microcomputer) 105 restarts data writing to the disk. The processing to be performed upon restart of data recording will be described with reference to Fig. 10. Fig. 10 shows processing to be performed when the power supply to the HDD 120 is recovered, and data writing is restarted.

The apparatus control portion (microcomputer) 105 detects the position of the disk-recorded-guaranteed position boundary information (pointer) 301 and, based on the boundary information (pointer) 301 as the starting position, restarts data writing processing from the (a) data storage portion (memory) 104 on the apparatus body side to the (b) data holding unit (HDD cache memory) 121 (see Fig. 4).

On the HDD side, on the other hand, under the control of the disk recording control portion 123 on the HDD 120 side, predetermined recording unit data is selected from the data written from the data storage portion (memory) 104 on the apparatus body side to the data holding unit (HDD cache memory) 121 (see Fig. 4), and processing of recording onto the disk 122 (see Fig. 4) is performed thereon.

The data writing processing from the data storage portion (memory) 104 on the apparatus body side to the data holding unit (HDD cache memory) 121 (see Fig. 4) is performed as processing of re-writing of written data before shut off of the power supply to the HDD 120. The data recording from the data holding unit (HDD cache memory) 121 to the disk 122 may partially be performed as over-writing processing on recorded data.

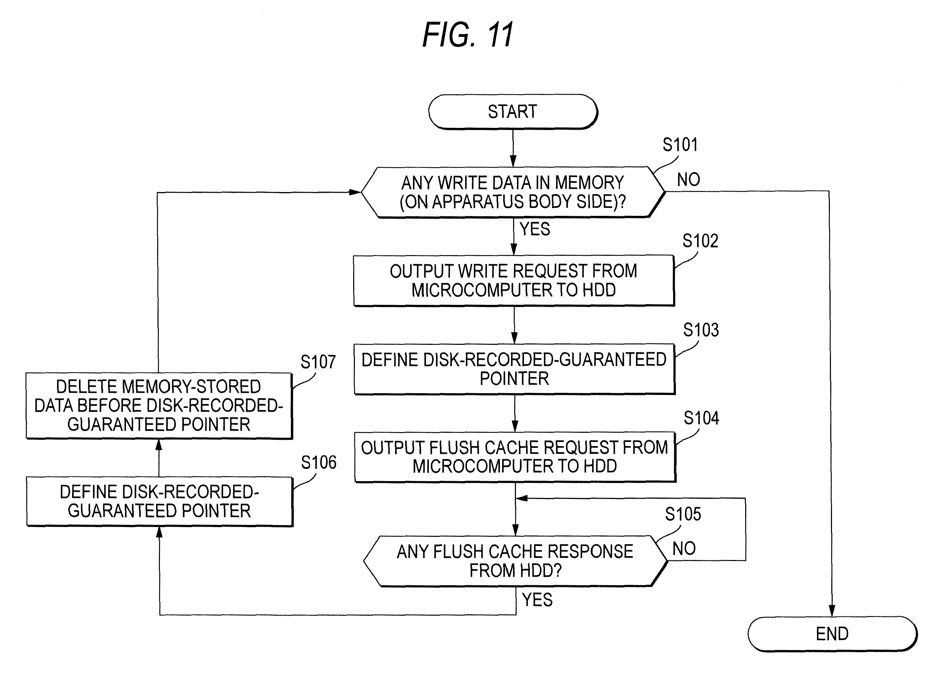

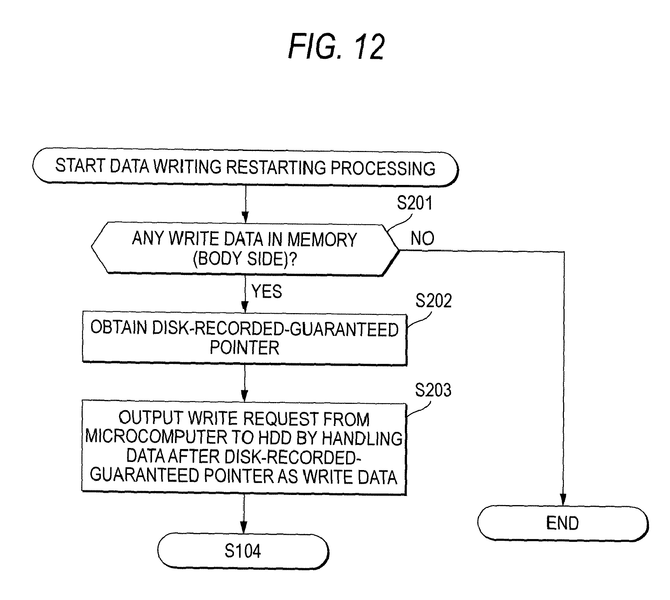

Next, a data recording processing sequence in the information recording apparatus according to this embodiment of the invention will be described with reference to the flowcharts shown in Figs. 11 and 12. Fig. 11 shows a flow describing the sequence of normal data writing processing while Fig. 12 shows a flow describing the sequence of data recording restarting processing after the recovery after the power supply to the HDD is shut off in an emergency such as a drop of the apparatus.

First of all, referring to the flowchart shown in Fig. 11, the sequence of normal data writing processing will be described. Notably, the processing shown in Fig. 11 is to be performed as control processing by the apparatus control portion (microcomputer) 105.

First in step S101, whether any write data exists in the memory on the apparatus body side or not is determined. That is, whether any write data exists in the data storage portion (memory) 104 on the apparatus body side shown in Fig. 1 or not is determined. If not, the processing ends without performing the data recording processing.

If write data exists in the memory on the apparatus body side, the processing moves to step S102 where a data writing request is output from the apparatus control portion (microcomputer) 105 to the control portion of the HDD 120. The control portion of the HDD 120 is informed by the input of the data writing request from the apparatus control portion (microcomputer) 105 that data to be recorded exists in the data storage portion (memory) 104 and starts data recording processing on the hard disk.

Next, the apparatus control portion (microcomputer) 105 defines disk-recorded-guaranteed position boundary information (pointer) at the data recorded position in the data storage portion (memory) 104. The boundary information (pointer) is data completely undergone the flush cache processing, that is, disk-recorded-guaranteed position boundary information (pointer) indicating the position of data having recorded on the disk completely and securely as described above. Initially, the boundary information (pointer) is defined at the beginning of the stored data in the data storage portion (memory) 104.

Next, the apparatus control portion (microcomputer) 105 outputs a flush cache request to the disk recording control portion 123 on the HDD 120 side. The flush cache request is sporadically output from the apparatus control portion (microcomputer) 105 to the disk recording control portion 123 of the HDD 120 during the execution of the data recording processing. More specifically, every predetermined period of time or for each predetermined recording data unit, the flush cache request is output from the apparatus control portion (microcomputer) 105 to the HDD 120.

Next, the apparatus control portion (microcomputer) 105 in step S105 determines the presence of the flush cache response from the disk recording control portion 123 on the HDD 120 side and waits until the flush cache response is input from the HDD 120.

Upon receipt of the flush cache response from the HDD 120, the disk-recorded-guaranteed position boundary information (pointer) is updated in step S106. The processing corresponds to the processing at time t=t7 in Fig. 8, which has been described above. Upon receipt of the flush cache response from the HDD side, the apparatus control portion (microcomputer) 105 moves the disk-recorded-guaranteed position boundary information (pointer) to the position of the data having undergone the flush cache processing completely, that is, the data having recorded onto the disk completely and securely.

Next in step S107, the memory-stored data before the position of the updated disk-recorded-guaranteed position boundary information (pointer) is deleted. The processing corresponds to the processing at time t=t8 in Fig. 8, which has been described above. After updating the disk-recorded-guaranteed position boundary information (pointer) in step S106, the apparatus control portion (microcomputer) 105 deletes the memory-stored data before the boundary information (pointer). The data is data having undergone the flush cache processing completely, that is, the data guaranteed as data having recorded onto the disk completely and securely.

After the step, the processing returns to step S101, and the same processing is repeated if write data is stored in the data storage portion (memory) 104. The recording processing ends when all of the data stored in the data storage portion (memory) 104 undergoes the recording processing completely, and the data in the data storage portion (memory) 104 is deleted.

Next, the sequence of the data recording restarting processing after the recovery after the shut off of the power supply to the HDD in emergency such as a drop of the apparatus will be described with reference to the flowchart shown in Fig. 12. Notably, the processing shown in Fig. 12 is also to be performed as control processing by the apparatus control portion (microcomputer) 105.

First in step S201, whether any write data exists in the memory on the apparatus body side or not is determined. That is, whether any write data exists in the data storage portion (memory) 104 on the apparatus body side shown in Fig. 1 or not is determined. If not, the processing ends without performing the data recording processing.

If write data exists in the memory on the apparatus body side, the processing moves to step S202. In this case, the data recording processing is to be performed after the recovery after the shut off of the power supply to the HDD in emergency such as a drop of the apparatus, and it is regarded that the data recording processing has been performed when the shut off of the power supply to the HDD.

In step S202, the apparatus control portion (microcomputer) 105 detects the disk-recorded-guaranteed position boundary information (pointer) defined in the data storage portion (memory) 104. The boundary information (pointer) is disk-recorded-guaranteed position boundary information (pointer) indicating the position of data completely undergone the flush cache processing, that is, data having recorded in the disk completely and securely as described above. Therefore, in this processing sequence, the boundary information (pointer) indicates the position of data recorded on the disk completely upon execution of the power off to the HDD.

In step S203, a write request is output from the microcomputer to the HDD for the data after the disk-recorded-guaranteed position boundary information (pointer) as write data. That is, by using the disk-recorded-guaranteed position boundary information (pointer) as the starting point, the data after the boundary information (pointer) is written to the data holding unit (HDD cache memory). On the HDD side, the processing is performed in which the data newly written to the data holding unit (HDD cache memory) is recorded on the disk. The processing corresponds to the processing described with reference to Fig. 10 above.

The processing sequence after the recording processing is the same processing as the processing after step S104 in the flow shown in Fig. 11.

As described above, in the information recording apparatus according to this embodiment of the invention, a flush cache request is output and the response is received upon execution of the data recording processing to the hard disk in order to check the presence of the data which has been stored in the cache memory on the HDD side but has not recorded on the disk. Then, on condition that the response is received, the data for the flush cache is deleted from the memory on the apparatus body side. Thus, even when data is lost from the memory on the HDD side upon shut off of the power supply to the HDD in emergency, the data not recorded on the disk is guaranteed to be securely held in the memory on the apparatus side. Therefore, restarting data recording on the disk after restarting the HDD can provide complete data recording without any data loss.

Furthermore, since the microcomputer is configured to identify the position of the data recorded on the disk by boundary information (pointer), the data recording restarting position upon restart of data recording after the shut off of the power supply to the HDD can be identified by the boundary information (pointer).

Having described details of the invention with reference to the specific embodiment, it is self-evident that those skilled in the art can modify and/or substitute the embodiment without departing from the substance of the invention. In other words, the invention has been disclosed for illustrative purpose only, and it should not be interpreted limitedly. The substance of the invention should be determined in consideration of the appended claims.

The series of processing described herein may be executed by hardware, software or a combined construction of both. The execution of the processing by software may be achieved by installing and executing a program recording the processing sequences in a memory within a computer built in specific hardware or by installing and executing the program in a generic computer in which various processing is executable.

For example, the program may be recorded in a hard disk or a Read-Only Memory (ROM) as recording media in advance. Alternatively, the program may be temporarily or permanently stored (or recorded) in a removable recording medium such as a flexible disk, a Compact Disc Read-Only Memory (CD-ROM), a Magneto optical (MO) disk, a Digital Versatile Disc (DVD), a magnetic disk and a semiconductor memory. Such a removable recording medium can be provided as so-called package software.

In addition to the install from a removable recording medium as described above to a computer, the program may be transferred from a download site to a computer in a wireless manner or may be transferred to a computer over a network such as a Local Area Network (LAN) and the Internet in a wired manner. The computer may receive the program transferred in this way and install it in a recording medium such as a self-contained hard disk.

The processing described herein may be not only executed in a time-series manner as described herein but also may be executed in parallel or separately in accordance with the processing ability of an apparatus, which executes the processing, or as required. The system herein is a logical set construction of multiple devices, and the component devices are not always accommodated in one cabinet.

In recent years, with decreases in size of HDDs, the HDDs are increasingly built in small equipment. HDDs are also cost-effective in unit price of the recording capacity of a recording medium and will be therefore widely adopted as large-capacity storage media. However, the destruction of the disk due to a mechanical impact loses all data in the HDD, resulting in a big loss for a user because of the large capacity. Accordingly, the construction for head evacuation processing in the HDD may be required in equipment including the HDD.

In the construction, the invention is a useful technology. That is, a microcomputer functioning as a control portion on the apparatus side outputs a flush cache request and receives the response thereto in order to check the presence of the data which has been stored in the cache memory on the HDD side but has not recorded on the disk itself upon execution of data recording processing on the hard disk. Then, on condition that the flush cache response indicating that the recording on the disk has completed is received, the data to be flush-cached is deleted from the memory on the apparatus body side. Thus, even when data is lost from the memory on the HDD side when the power supply to the HDD is shut off in emergency such as a drop, the data not recorded on the disk is guaranteed to be securely held in the memory on the apparatus side. Therefore, restarting data recording on the disk after restarting the HDD can provide complete data recording without any data loss.

## Claims

1. An information recording apparatus (100) for performing data recording processing, comprising:
a data storage portion (104) holding write data on a disk (122);
an apparatus control portion (105) managing the data storage portion (104) and controlling data recording processing; and
a disk recording control portion (123) obtaining data held in the data storage portion (104) and performing processing of recording on the disk through data holding means (121),
wherein the apparatus control portion (105) is configured to perform, in the data recording processing on the disk (122), processing of:
defining boundary information (301) indicating the boundary position between disk-recorded-guaranteed data, which is guaranteed as data having been recorded on the disk (122) completely, and unguaranteed data in data held in the data storage portion (104); and
deleting the disk-recorded data identified by the boundary information selectively from the data storage portion (104).

2. The information recording apparatus according to Claim 1,
wherein the apparatus control portion (105) is configured to perform processing of, in the data recording processing on the disk (122):
outputting an execution instruction for the completion of and completion response for the disk recording processing on the data written in the data holding means (121) to the disk recording control portion (123); and
updating the boundary information (301) based on the receipt of the completion response to the execution instruction.

3. The information recording apparatus according to Claim 2,
wherein the apparatus control portion (105) is configured to perform processing of deleting disk recorded data newly identified by the updated boundary information (301) from the data storage portion (104) after the update of the boundary information.

4. The information recording apparatus according to Claim 1, further comprising:
an acceleration detecting portion (106) detecting an acceleration occurring in the information recording apparatus (100),
wherein the apparatus control portion (105) is configured to perform processing of evacuating the head, which writes or reads data to/from the disk (122), when an acceleration corresponding to a drop of the information recording apparatus (100) is detected based on detection information input from the acceleration detecting portion (106).

5. The information recording apparatus according to Claim 1, further comprising:
an acceleration detecting portion (106) detecting an acceleration occurring in the information recording apparatus (100),
wherein the apparatus control portion (105) is configured to perform the shut-off of the power supply (107) to the driving portion (120) of the disk (122) when an acceleration corresponding to a drop of the information recording apparatus (100) is detected based on detection information input from the acceleration detecting portion (106).

6. The information recording apparatus according to Claim 1, further comprising:
an acceleration detecting portion (106) detecting an acceleration occurring in the information recording apparatus (100),
wherein the apparatus control portion (105) is configured to:
perform processing of checking whether the information recording apparatus (100) has recovered to a stable state or not based on detection information input from the acceleration detecting portion (106);
restart power supply (107) to the driving portion (120) of the disk (122) on condition that the recovery to the stable state is confirmed; and
perform data recording processing control in which the disk-recorded-unguaranteed data identified by the position of the boundary information (301) defined in the data storage portion (104) is defined as the data to undergo recording processing on the disk (122).

7. An information recording method for performing data recording processing on a disk (122) in an information recording apparatus (100), comprising:
a memory storage step of storing data to be recorded in a data storage portion (104);
a data storage step of obtaining data held in the data storage portion (104) and storing the data in data holding means (121);
a disk recording processing step of recording data stored in the data holding means (121) onto the disk (122);
the step of defining boundary information (301) indicating the boundary position between disk-recorded-guaranteed data, which is guaranteed as data having recorded on the disk (122) completely, and unguaranteed data in the data held in the data storage portion (104); and
a data deleting step of performing processing of deleting disk-recorded data identified by the boundary information (301) selectively from the data storage portion (104).

8. The information recording method according to Claim 7, further comprising the steps of:
outputting an execution instruction for the completion of and completion response for the disk recording processing on the data written in the data holding means (121) from an apparatus control portion (105) for managing the data storage portion (104) to a disk recording control portion (123) for controlling processing of recording write data in the data holding means (104) onto the disk (122); and
performing processing of updating the boundary information (301) on condition that the completion response is received in the apparatus control portion (105) .

9. The information recording method according to Claim 8, further comprising the step of:
performing processing of deleting disk-recorded data newly identified by the updated boundary information from the data storage portion (104) after the update of the boundary information (301).

10. The information recording method according to Claim 7, further comprising the steps of:
inputting detection information on an acceleration of the information recording apparatus (100) from an acceleration detecting portion (106); and
performing processing of evacuating the head, which writes or reads data to/from the disk (122), when an acceleration corresponding to a drop of the information recording apparatus (100) is detected.

11. The information recording method according to Claim 7, further comprising the steps of:
inputting detection information on an acceleration of the information recording apparatus (100) from an acceleration detecting portion (106); and
performing the shut off of the power supply (107) to the driving portion (120) of the disk (122) when an acceleration corresponding to a drop of the information recording apparatus (100) is detected.

12. The information recording method according to Claim 7, further comprising the steps of:
performing processing of checking whether the information recording apparatus (100) has recovered to a stable state or not based on detection information input from an acceleration detecting portion (106); and
restarting power supply (107) to the driving portion (120) of the disk (122) on condition that the recovery to the stable state is confirmed and performing data recording processing control in which the disk-recorded-unguaranteed data identified by the position of the boundary information defined in the data storage portion (104) is defined as the data to undergo recording processing on the disk (122).

13. A computer program causing to control data recording processing on a disk (122) in an information recording apparatus (100), comprising:
a memory storage step of storing data to be recorded in a data storage portion (104);
a data storage step of obtaining data held in the data storage portion (104) and storing the data in data holding means (121);
a disk recording processing step of recording data stored in the data holding means (121) onto the disk (122);
the step of defining boundary information (301) indicating the boundary position between disk-recorded-guaranteed data, which is guaranteed as data having recorded on the disk (122) completely, and unguaranteed data in the data held in the data storage portion (104); and
a data deleting step of performing processing of deleting disk-recorded data identified by the boundary information (301) selectively from the data storage portion (104).
